(19) Europäisches Patentamt
European Patent Office
Office européen des brevets

(11) **EP 2 775 317 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(51) Int Cl.:
*G01S 13/90* (2006.01)      *H01Q 19/17* (2006.01)

(21) Anmeldenummer: **14156023.5**

(22) Anmeldetag: **20.02.2014**

(54) **Verfahren zum Betreiben eines Radarsystems mit synthetischer Apertur im Sende- und Empfangsbetrieb**

Method for operating a radar system with synthetic aperture in the transmission/reception mode

Procédé de fonctionnement d'un système radar avec ouverture synthétique en mode d'émission et de réception

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2013 DE 102013203657**

(43) Veröffentlichungstag der Anmeldung:
**10.09.2014 Patentblatt 2014/37**

(73) Patentinhaber: **Deutsches Zentrum für Luft- und Raumfahrt e.V.**
**51147 Köln (DE)**

(72) Erfinder:
• **Lopez-Dekker, Francisco**
**81245 München (DE)**
• **Bertl, Sebastian**
**85241 Hebertshausen (DE)**
• **Younis, Marwan**
**82234 Weßling (DE)**
• **Krieger, Gerhard**
**82131 Gauting (DE)**

(74) Vertreter: **Fink Numrich**
**Patentanwälte PartmbB**
**European Patent and Trademark Attorneys**
**Wendl-Dietrich-Straße 14**
**80634 München (DE)**

(56) Entgegenhaltungen:
**US-A1- 2009 262 037     US-B1- 6 175 326**

**Beschreibung**

Die Erfindung betrifft Verfahren zum Betreiben eines Radarsystems mit synthetischer Apertur im Sendefall und im Empfangsfall. Das Radarsystem umfasst eine Reflektorantenne und einen Erreger.

Ein Radarsystem mit synthetischer Apertur wird auch als Seitensicht-SAR-System bezeichnet. SAR (Synthetic Aperture Radar)-Systeme ermöglichen die Fernerkundung der Erdoberfläche für die Erfassung von an der Erdoberfläche reflektierten Radarpulsen, welche von dem SAR-System ausgesendet werden, das sich auf einer Plattform mit konstanter Geschwindigkeit über der Erdoberfläche bewegt. Bei einem solchen System macht man sich die Erkenntnis zu Nutze, dass aufgrund der bewegten Plattform die gleichen Bereiche der Erde in unterschiedlichen Positionen erfasst werden, wodurch eine Amplituden- und Phaseninformation und schließlich ein Radarbild der Erdoberfläche erhalten werden kann. Bei einem SAR-System stehen sich die erreichbare Auflösung und die von dem SAR-System erfassbare Streifenbreite, d.h. die Breite des über das Radarsystem erfassbaren Streifens auf der Erdoberfläche in Richtung senkrecht zur Flugrichtung der Plattform, als konkurrierende Parameter gegenüber. Zur Erhöhung der Auflösung bei gegebener Streifenbreite von SAR-Systemen ist die Verwendung von Multi-Apertur-Systemen bekannt, bei denen Radarechos durch mehrere Empfänger gleichzeitig erfasst werden.

Es ist auch bekannt, ein Satelliten-gestütztes, abbildendes SAR-System interferometrisch zu betreiben. Bei einem interferometrischen Betrieb des SAR-Systems werden zwei oder mehrere Sende- und/oder Empfangsphasenzentren verwendet. Üblicherweise erfolgt ein Versatz der Sende- und/oder Empfangsphasenzentren in Flugrichtung zur Messung der Geschwindigkeit. Dies wird als *"along-track interferometry"* bezeichnet. Sind die Sende- und/oder Empfangsphasenzentren senkrecht zur Flugrichtung versetzt, kann eine Höhenmessung erfolgen. Dies wird als *"across-track interferometry"* bezeichnet. Bei den derzeit bekannten Lösungen kommen hierzu planare Gruppenantennen zur Erzeugung von zwei oder mehreren Phasenzentren zum Einsatz. Ziel der Messung an mehreren Phasenzentren kann eine Auswertung der Differenzphase zwischen den Phasenzentren zur Anwendung der interferometrischen Messprinzipien entlang der Flugrichtung oder die zeitgleiche Messung entlang der Flugbahn zum Zweck der effektiven Verkleinerung der Pulswiederholfrequenz sein. Um den Betrieb eines interferometrischen Radarsystems mit synthetischer Apertur zu ermöglichen, werden die mehreren Phasenzentren entlang der betrachteten Richtung ausgebildet und entsprechend ihrer dazugehörigen effektiven physikalischen Aperturgröße genügend hoch abgetastet.

Aus Anwendungen des Messprinzips auf unterschiedliche, passende Szenarien mit ein und demselben Radarsystem, ergeben sich verschiedene, vorgegebene Abstände für Phasenzentren sowie Größen der dazugehörigen Antennenaperturen. Die Größe der physikalischen Messapertur bestimmt wesentliche Merkmale des Radarsystems, wie Azimut-Auflösung, Azimut-Pulswiederholfrequenz und damit Streifenbreite. Die Größe der physikalischen Messapertur ist ebenso wie der Abstand der Phasenzentren ein wesentlicher Parameter, der das Messvermögen eines Radarsystems mit synthetischer Apertur und interferometrischer Messeinrichtung bestimmt. Es ist daher bei einem Radarsystem mit synthetischer Apertur wünschenswert, diese Parameter während des Betriebs des Radarsystems flexibel gestalten zu können. Für Radarsysteme mit synthetischer Apertur, die eine planare Antennengruppe (sog. "*Direct Radiating Antenna Array*") verwenden, existieren Methoden, die die flexible Gestaltung der Parameter ermöglicht.

Die US 6,175,326 B1 offenbart eine Reflektorantenne mit einem Feed Array und einem Addiernetzwerk, das aus Schaltern und variablen Dämpfungsgliedern besteht. Das Addiernetzwerk ist derart ausgebildet, dass keine Phasenbelegung der Erregersignale erfolgt. Im Empfangsfall erfolgt die Änderung der Strahlrichtung der Reflektorantenne durch Umschalten zwischen verschiedenen Erregerelementen. Eine Ausleuchtung der Reflektorantenne erfolgt durch verschiedene Erregerelemente mit unterschiedlichem Positionen und damit verbundenen unterschiedlichen Einfallswinkeln mit dem Ziel der Schwenkung des Fernfeldsignals. Das Verschwenken führt zu einer Optimierung in Bezug auf die Unterdrückung von Mehrdeutigkeiten.

Die US 2009/0262037 A1 offenbart ein Verfahren zum Betreiben eines Satellitengestützten Radarsystems mit synthetischer Apertur, wobei das Radarsystem eine Reflektorantenne und einen Erreger umfasst, der eine Mehrzahl an Erregerelementen und ein digitales Speisenetzwerk umfasst. Durch eine gezielte Phasenbelegung der Erregerelemente weisen Strahlen unterschiedlicher Phasenzentren unterschiedliche Richtungen auf.

Es ist Aufgabe der Erfindung, diese Flexibilität der Einstellung der oben genannten Parameter auch bei einem Radarsystem mit einer Reflektorantenne zu ermöglichen.

Diese Aufgabe wird gelöst durch ein Verfahren zum Betreiben eines Satellitengestützten Radarsystems mit synthetischer Apertur gemäß den Merkmalen des Anspruches 1 und den Merkmalen des Anspruches 8. Ein entsprechend ausgebildetes Radarsystem ist durch die Merkmale des Anspruches 12 beschrieben. Vorteilhafte Ausgestaltungen ergeben sich aus den abhängigen Patentansprüchen.

Betrachtet wird im Folgenden ein mehrkanaliges Radarsystem, bei dem sowohl Amplitude als auch Phase aller Sende- und Empfangskanäle im laufenden Betrieb einzeln gesteuert werden können. Die Steuerung der Amplitude kann sich im Sendefall auf das Aktivieren einzelner Kanäle beschränken. Sende- und Empfangspfade können getrennt voneinander oder aber in einem gemeinsamen Sende- und Empfangsmodul realisiert sein. Damit verwenden Sende und Empfangskanäle entweder verschiedene oder die gleichen Antennen.

Die Erfindung schafft ein Verfahren zum Betreiben eines Satelliten-gestützten Radarsystems mit synthetischer Apertur, wobei das Radarsystem eine Reflektorantenne und einen Erreger umfasst. Der Erreger umfasst zumindest zwei Erregerelemente und ein digitales Speisenetzwerk. Im Sendefall wird durch das digitale Speisenetzwerk eine Amplituden- und Phasenbelegung der Erregerelemente in vorgegebener Weise variiert, um von dem Erreger zur Reflektorantenne hin gerichtete Strahlen in Bezug auf deren Ausleuchtungsfläche der Reflektorantenne zur Erzeugung von Strahlen mit gleicher Richtung im Fernfeld zu steuern.

Im Empfangsfall wird durch das Speisenetzwerk in vorgegebener Weise eine Kombination der Amplituden und Phasen der von den Erregerelementen bereitgestellten Signale vorgenommen, um von der Reflektorantenne zu dem Erreger hin gerichtete Strahlen in Bezug auf deren Ausleuchtungsflächen der Reflektorantenne, welche von Strahlen mit gleicher Richtung im Fernfeld resultiert, zu steuern.

In beiden Fällen wird ein Phasenzentrum auf dem Reflektor erzeugt und dessen Position auf dem Reflektor von Sendepuls zu Sendepuls variiert, so dass der Abstand der erzeugten Phasenzentren zueinander entlang einer zu formenden synthetischen Apertur eingestellt wird.

Damit kann der Abstand der erzeugten Phasenzentren zueinander entlang einer zu formenden synthetischen Apertur eingestellt werden. Vorteile ergeben sich damit, falls die verwendete Pulswiederholfrequenz leicht variiert wird, aber trotzdem eine gleichmäßige räumliche Abtastung erreicht werden soll.

Hierdurch sind eine flexible Positionierung des Phasenzentrums sowie eine flexible Gestaltung der dazugehörigen effektiven Antennenaperturgröße bei einem Reflektor-basierten Radarsystem sowohl in Sende- als auch im Empfangsfall möglich. Wenn in der vorliegenden Beschreibung von einem Phasenzentrum die Rede ist, so ist hierunter der elektronische Referenzpunkt einer Antenne zu verstehen, bezüglich dessen Laufzeit- und Phasenmessungen durchgeführt werden. Die Verfahren ermöglichen es, Satelliten-gestützte SAR-Systeme mit Reflektorantennen flexibel an verschiedene Anforderungen bezüglich der Anzahl der Phasenzentren und der Größe der dazugehörigen Aperturen während des Betriebs anzupassen.

Die nachfolgenden Ausgestaltungen beziehen sich auf den Sendefall:

Gemäß einer Ausgestaltung wird zur Erzeugung eines Phasenzentrums, das in einer Mitte der Reflektorantenne ausgebildet ist, die Reflektorantenne teilweise oder vollständig ausgeleuchtet, wobei aktiv angesteuerte Erregerelemente durch das Speisenetzwerk mit einem Sendesignal mit der gleichen Phase angesteuert werden. Die vollständige Ausleuchtung der Reflektorantenne entspricht dabei dem herkömmlichen Betrieb eines Reflektor-basierten Radarsystems. Unter der Mitte der Reflektorantenne ist die geometrische Mitte des Reflektors zu verstehen.

Ebenso können zur Erzeugung eines Phasenzentrums, das aus der Mitte der Reflektorantenne in einer Erstreckungsrichtung ausgelenkt ist und einen Ausschnitt der Reflektorantenne beleuchtet, aktiv angesteuerte Erregerelemente mit einem Sendesignal mit unterschiedlicher Phase angesteuert werden. Soll das Satelliten-gestützte Radarsystem zu interferometrischen Messungen verwendet werden, so liegt die Erstreckungsrichtung vorzugsweise in Bewegungsrichtung der Plattform, an der das Radarsystem angeordnet ist.

Das Maß der Auslenkung kann durch den Phasenunterschied des Sendesignals zwischen den, insbesondere zwischen jeweils zwei benachbarten, Erregerelementen gesteuert werden. Für N Elemente, deren gemeinsam geformter, zum Reflektor hin gerichteter Strahl um den Winkel θ ausgelenkt sein soll, ergibt sich eine Phasenbelegung der Elemente Φ(n) von

$$\Phi(n) = 2\pi/\lambda \cdot \Delta x \cdot \sin(\theta) \cdot n, \quad n = 0, 1, \ldots, N\text{-}1.$$

Dabei bezeichnet λ die Wellenlänge bei der verwendeten Betriebsfrequenz f, Δx den Abstand zwischen zwei Erregerelementen und n den Index der jeweiligen Elemente eines Erregers mit N Elementen.

Der beleuchtete Ausschnitt der Reflektorantenne kann durch die Anzahl der aktiv angesteuerten, d.h. mit einem Sendesignal beaufschlagten, Erregerelemente gesteuert werden.

In einer weiteren Ausgestaltung ist vorgesehen, dass mehrere Phasenzentren mit jeweiliger Apertur erzeugt werden, indem eine jeweilige Gruppe von Erregerelementen durch das Speisenetzwerk angesteuert, d.h. mit einem Sendesignal beaufschlagt, wird, wobei jedem Phasenzentrum eine Gruppe mit zumindest zwei Erregerelementen zugeordnet ist. In der vorliegenden Beschreibung wird der Begriff der Apertur gleichbedeutend mit dem beleuchteten Ausschnitt der Reflektorantenne bzw. dem Begriff der Antennapertur bzw. Antennenaperturgröße verwendet.

Unter gewissen Voraussetzungen bezüglich der zu vermessenden Objekte können gemäß einer weiteren Ausgestaltung die einer jeweiligen Gruppe von Erregerelementen zugeführten Signale derart geformt sein, dass sie auch bei zeitgleicher Abstrahlung von verschiedenen Phasenzentren voneinander getrennt werden können. In einem Betrieb, in dem mehrere Phasenzentren zu unterschiedlichen Zeitpunkten erzeugt werden, ist die zeitliche Trennung beim Empfang der gestreuten Signale ausreichend, um die beim Senden der jeweiligen Gruppen von Erregerelementen zugeführten Signale zu trennen.

Die nachfolgend beschriebenen Ausgestaltungsvarianten beziehen sich auf den Empfangsfall:

Gemäß einer Ausgestaltung werden zur Erzeugung eines Phasenzentrums, das aus der Mitte der Reflektorantenne in einer Erstreckungsrichtung ausgelenkt ist und einen Ausschnitt der Reflektorantenne beleuchtet, Signale von Erregerelementen mit unterschiedlicher Phase kombiniert.

Der beleuchtete Ausschnitt (d.h. die Apertur) der Reflektorantenne kann durch die Anzahl der miteinander kombinierten Signale von Erregerelementen gesteuert werden.

In einer weiteren Ausgestaltung werden mehrere Phasenzentren mit jeweiliger Apertur erzeugt, indem die Signale einer jeweiligen Gruppe von Erregerelementen durch das Speisenetzwerk kombiniert werden, wobei jedem Phasenzentrum eine Gruppe mit zumindest zwei Erregerelementen zugeordnet ist.

Der Abstand der Phasenzentren kann dabei ebenfalls an eine gerade verwendete Pulswiederholfrequenz angepasst werden.

Die oben beschriebenen Verfahren lassen sich durch ein Radarsystem mit synthetischer Apertur durchführen, wobei das Radarsystem eine Reflektorantenne und einen Erreger umfasst, wobei der Erreger zumindest zwei Erregerelemente und ein digitales Speisenetzwerk umfasst. Das Radarsystem ist dazu ausgebildet, im Sendefall durch das Speisenetzwerk eine Amplituden- und Phasenbelegung der Erregerelemente in vorgegebener Weise zu variieren, um von dem Erreger zur Reflektorantenne hin gerichtete Strahlen in Bezug auf deren Ausleuchtungsfläche der Reflektorantenne zur Erzeugung von Strahlen mit gleicher Richtung im Fernfeld zu steuern und/oder im Empfangsfall durch das Speisenetzwerk in vorgegebener Weise eine Kombination der Amplituden und Phasen der von den Erregerelementen bereitgestellten Signale vorzunehmen, um von der Reflektorantenne zu dem Erreger hin gerichtete Strahlen in Bezug auf deren Ausleuchtungsfläche der Reflektorantenne, welche von Strahlen mit gleicher Richtung im Fernfeld resultiert, zu steuern.

Dabei wird ein Phasenzentrum auf dem Reflektor erzeugt und dessen Position auf dem Reflektor von Sendepuls zu Sendepuls variiert, so dass der Abstand der erzeugten Phasenzentren zueinander entlang einer zu formenden synthetischen Apertur eingestellt wird.

Bei dem erfindungsgemäßen Radarsystem kann die Reflektorantenne dabei lediglich einen einzigen Reflektor aufweisen. Lediglich durch entsprechende Ansteuerung des digitalen Speisenetzwerks des Erregers können die Anzahl und der oder die Orte der Phasenzentren sowie die Größe der jeweiligen Antennenaperturen gesteuert werden.

Vorzugsweise weist der Reflektor in einem Schnitt in Längsrichtung, d.h. in einer Bewegungsrichtung des Radarsystems bzw. einer Richtung, in der die mehreren Phasenzentren liegen, die Eigenschaften eines Parabolreflektors auf.

Wahlweise ist der Reflektor ein Reflect-Array aus einer Mehrzahl an Einzelreflektoren, wobei die einzelnen Reflektoren die Phasen auftreffender elektromagnetischer Wellen in vorgegebener Weise verschieben, um die Eigenschaften des Parabolreflektors nachzubilden. Alternativ umfasst der Reflektor einen einzigen, insbesondere gekrümmten, Hauptspiegel, dessen Oberfläche in dem Schnitt eine parabolische Krümmung aufweist. Insbesondere ist es nicht erforderlich, dass der Reflektor eine rotationssymmetrische Gestalt aufweist. Lediglich muss der von dem Erreger beleuchtete Bereich im Schnitt die erforderliche parabolische Krümmung aufweisen.

Der Erreger ist vorzugsweise im Brennpunkt der Reflektorantenne angeordnet.

Die Erfindung weist eine Reihe von Vorteilen auf. Beispielsweise kann Interferometrie mit einem einzigen Reflektor durchgeführt werden. Gegenüber der Realisierung mehrerer Phasenzentren mit einem Antennensystem, das auf Gruppenantennen basiert, ist eine flexiblere Positionierung der Phasenzentren möglich, da die Position über einen fein einstellbaren Phasenversatz zwischen den einzelnen Erregerelementen des digital ansteuerbaren Erregers erfolgen kann, anstelle über diskrete Antennenaperturen der Gruppenantenne. Die zur Durchführung des Verfahrens notwendige Vorrichtung kann unter Nutzung bekannter Systeme auf einfache Weise bereit gestellt werden. Ferner lässt sich das Verfahren auch zur Störunterdrückung nutzen.

Aufgrund der digitalen Ansteuerbarkeit des Erregers ist eine Formung mehrerer Phasenzentren im Empfangsfall bzw. im Sendefall bei vorhandener Trennung der Signale durch Orthogonalisierung gleichzeitig möglich.

Die Größe der zu einem Phasenzentrum gehörenden Apertur kann in diskreten Schritten, abhängig von der Anzahl der Erregerelemente des Erregers, variiert werden. Die Erregerelemente des Erregers können linienförmig oder aber in einem Array angeordnet sein.

Die Realisierung eines Radarsystems mit einer Reflektorantenne bietet Vorteile bei Verlusten in den HF (Hochfrequenz)-Signalwegen und beim Gewicht. Dies ermöglicht die Realisierung sehr großer Aperturabmessungen.

Das beschriebene Vorgehen ermöglicht eine flexible Ausleuchtung eines Reflektors, um wahlweise bei gesamter Ausleuchtung des Reflektors eine stark gebündelte Antennenkeule zu erzeugen oder um bei Ausformung mehrerer Phasenzentren und damit verbundenen kleineren, durch den Erreger beleuchteten Ausschnitten des Reflektors, mehrere bereite Antennenkeulen mit unterschiedlichen Phasenzentren zu formen.

Die Erfindung wird nachfolgend näher anhand von Ausführungsbeispielen in der Zeichnung erläutert. Es zeigen:

Fig. 1          einen schematischen Vergleich eines Reflektor-basierten SAR-Systems mit einem SAR-System mit planarer Gruppenantenne, wobei zwei Phasenzentren entlang der verfügbaren Gesamtapertur jeweils beispielhaft ausgebildet sind,

Fig. 2 eine schematische Darstellung eines erfindungsgemäßen Radarsystems, bei dem ein parabolförmiger Reflektor mit einem aus der Mitte der Reflektorantenne ausgelenkten Phasenzentrum mit kleiner Apertur durch den Erreger bestrahlt ist,

Fig. 3 eine schematische Darstellung eines erfindungsgemäßen Radarsystems, bei dem ein parabolförmiger Reflektor mit einem aus der Mitte der Reflektorantenne ausgelenkten Phasenzentrum mit großer Apertur durch den Erreger bestrahlt ist,

Fig. 4 eine schematische Darstellung eines erfindungsgemäßen Radarsystems, bei dem auf einem parabolförmigen Reflektor im Empfangsfall vier Phasenzentren durch digitale Strahlformung erzeugt sind,

Fig. 5 eine schematische Darstellung eines erfindungsgemäßen Radarsystems, bei dem auf einem parabolförmigen Reflektor im Empfangsfall zwei Phasenzentren erzeugt sind,

Fig. 6 bis 10 jeweils für unterschiedliche Konfigurationen von Phasenzentren die sich ergebenden Oberflächenströme auf dem Reflektor und die sich korrespondierend ausbildenden Fernfelddiagramme, und

Fig. 11 ein exemplarisches Blockschaltbild eines Radarsystems, das einen erfindungsgemäßen Betrieb ermöglicht.

Zum besseren Verständnis wird nachfolgend das Prinzip einer SAR-Messung anhand der von einem satellitengestützten SAR-System ausgesendeten Radarstrahlung erläutert. Das SAR-System (nachfolgend auch als Satellit bezeichnet) bewegt sich in einer Richtung, welche als Azimut-Richtung bezeichnet wird. Der Satellit, dessen Höhe über der Erdoberfläche bekannt ist, sendet während seiner Bewegung in Azimut-Richtung kontinuierlich Radarpulse über eine Sendeantenne in Richtung zur Erdoberfläche aus. Von jedem ausgesendeten Radarpuls wird das Radarecho erfasst, indem die an der Erdoberfläche reflektierte Radarstrahlung in der sog. Range-Richtung, welche sich senkrecht zur Flugrichtung oder Azimut-Richtung des Satelliten erstreckt, mit einem Empfänger zeitlich abgetastet wird.

Als Folge erhält man eine Vielzahl von Abtastungen, wobei jede Abtastung dem Radarecho eines bestimmten Radarpulses und einer Range-Position entspricht. Die Zuordnung einer Abtastung zu einem Radarpuls wird dabei durch eine Azimut-Position repräsentiert, welche der geometrische Mittelpunkt zwischen der Azimut-Position des Senders beim Aussenden des Radarpulses und der Azimut-Position des Empfängers beim Empfang des Radarechos des Radarpulses ist. Der Sender und der Empfänger sind dabei z.B. Bestandteil einer kombinierten Sende-Empfangsantenne, welche im Sendebetrieb den Sender und im Empfangsbetrieb den Empfänger darstellt. In diesem Fall handelt es sich bei dem SAR-System um ein sog. Einzel-Apertur-System, bei dem die Radarechos nur durch einen einzelnen Empfänger, d.h. nicht gleichzeitig durch mehrere Empfänger, erfasst werden.

Bei der Auswertung werden nur Informationen der Radarstrahlung innerhalb eines von dem ausgesendeten Radarpuls beleuchteten Bodenstreifens (englisch: Swath) erfasst, der eine Breite von mehreren Kilometern, z.B. einige zehn oder hundert Kilometer, aufweisen kann.

Das Prinzip der SAR-Messung beruht nunmehr darauf, dass jeweilige Punkte auf die Erdoberfläche mehrfach aus unterschiedlichen Blickwinkeln aufgrund der Bewegung des Satelliten erfasst werden. Aufgrund des bekannten Doppler-Effekts kommt es bei der Erfassung des Radarechos zu einer Frequenzverschiebung, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Daten ist dem Fachmann bekannt und wird deshalb nicht weiter im Detail erläutert. Mit dem SAR-Verfahren wird durch eine Vielzahl von Radarpulsen eines Radarsenders kleiner Apertur eine größere synthetische Apertur entsprechend der Ausdehnung des Radarpulses auf der Erdoberfläche simuliert.

Üblicherweise werden in einem derartigen SAR-System Radarpulse mit einer festen Pulswiederholrate PRF (*Pulse Repetition Frequency*) ausgesendet. Die Pulswiederholrate ist abhängig von der Apertur des Empfängers und der Geschwindigkeit, mit der sich der Satellit in Azimut-Richtung bewegt. Um mit einem Einzel-Apertur-Radarsystem einen breiten Streifen auf der Erdoberfläche zu erfassen, ist die Pulswiederholrate PRF möglichst klein zu wählen. Dies hat jedoch wiederum den Nachteil, dass hierdurch die Auflösung in Azimut-Richtung immer geringer wird.

Um eine hohe Auflösung in Azimut-Richtung mit gleichzeitig großem Abstand zwischen den Bereichen zu erreichen, ist es aus dem Stand der Technik bekannt, sog. Multi-Apertur-Radarsysteme zu verwenden, bei denen das Radarsignal gleichzeitig durch mehrere Empfänger erfasst wird. Dieses System führt jedoch zu einer längeren Antenne in Azimut-Richtung.

Ferner kann gegebenenfalls die Pulswiederholrate erhöht werden, wobei hier die Gefahr der Entstehung von Mehrdeutigkeiten entsteht. Eine Mehrdeutigkeit ergibt sich beispielsweise dann, wenn das Radarecho eines zuerst ausgesendeten Radarpulses noch nicht vollständig empfangen ist, bevor ein weiterer Radarpuls durch das SAR-System ausgesendet wurde.

Das nachfolgend näher beschriebene, erfindungsgemäße SAR-System ermöglicht über den oben beschriebenen Betrieb hinaus auch die optionale Nutzung der dem Fachmann hinlänglich bekannten Interferometrie mittels einer einzigen Reflektorantenne, bei der Informationen von zwei oder mehreren Sende- und/oder Empfangsphasenzentren ausgewertet werden. Typischerweise kommt hierbei ein Versatz in Flugrichtung, d.h. in Azimut-Richtung, zur Messung der Geschwindigkeit (englisch: *along-track interferometry*) oder senkrecht zur Flugrichtung zur Höhenmessung (englisch: *across-track interferometry*) zur Anwendung.

Möglich wird die Formung mehrerer Phasenzentren mit verschiedenen Positionen und dazugehörigen Ausdehnungen für ein Reflektor-basiertes Radarsystem durch das Vorsehen eines Reflektors, in dessen Brennpunkt ein Erreger (d.h. ein Sende- und Empfangsteil) angeordnet ist. Mittels eines digitalen Speisenetzwerkes ist es möglich, eine digitale Strahlformung vorzunehmen, wodurch die Reflektorantenne selektiv nur zu Teilen beleuchtet werden kann. Allgemein umfasst der Erreger neben dem digital ansteuerbaren Speisenetzwerk eine dazugehörige Antennenapertur. Der Erreger umfasst weiter zumindest zwei Erregerelemente, d.h. Sende- und Empfangsteile. Jedes Erregerelement ist im Sendepfad durch das digitale Speisenetzwerk selektiv mit individuellen Signalen beaufschlagbar. Dabei macht man sich den Umstand zu Nutze, dass beim selektiven Ansteuern der Erregerelemente eine Überlagerung der jeweiligen Felder erfolgt, so dass eine selektive Ausleuchtung des Reflektors erfolgen kann. Im Empfangspfad können die von einem jeweiligen Erregerelement gelieferten Signale durch das digitale Speisenetzwerk in beliebiger, vorgegebener Weise miteinander kombiniert werden. Durch eine Variation der Amplituden und der Phasenbelegung der einzelnen Erregerelemente können damit Strahlen zum Reflektor oder vom Reflektor zum Erreger hin gerichtet geformt werden, so dass nur Ausschnitte der "großen" Reflektorantenne beleuchtet werden können. Hierdurch können gewünschte Phasenzentren gleichzeitig mit entsprechenden Ausdehnungen erzeugt werden.

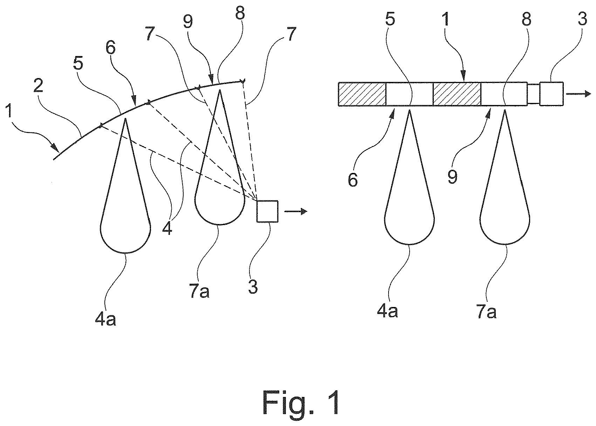

In den nachfolgend beschriebenen Ausführungsbeispielen in den Figuren 1 bis 5 ist die Reflektorantenne mit dem Bezugszeichen 1 gekennzeichnet. Die Reflektorantenne 1 besteht entweder aus einem einzigen Reflektor 2, der in einem Schnitt in Längsrichtung, d.h. in Bewegungsrichtung (Azimut-Richtung) des Radarsystems, eine parabolische Krümmung aufweist. Allgemein muss der Reflektor 2 in einem Schnitt in Längsrichtung die Eigenschaften eines Parabolreflektors aufweisen. Diese Eigenschaft ist auch bei einem Reflect-Array aus einer Mehrzahl an einzelnen Reflektoren erfüllt, wenn die Einzelreflektoren die Phasen auftreffender elektromagnetischer Wellen in vorgegebener Weise verschieben, um die Eigenschaften des Parabolreflektors nachzubilden. Bei Vorhandensein eines parabolischen Reflektors haben die erzeugten Antennendiagramme der verschiedenen Phasenzentren identische Hauptstrahlrichtungen und bei gleicher Aperturbreite jedes Phasenzentrums auch die gleiche Hauptwertbreite. Die Aperturbreite ist gleichbedeutend mit einem beleuchteten Ausschnitt der Reflektorantenne.

Der oben beschriebene Erreger ist mit dem Bezugszeichen 3 gekennzeichnet. Die bereits erwähnten Erregerelemente des Erregers 3 sind nicht näher dargestellt. Diese können in einer dem Fachmann bekannten Weise auf einer gemeinsamen Achse angeordnet sein, so dass diese zum Mittelpunkt des parabolisch gekrümmten Reflektors jeweils den gleichen Abstand aufweisen. Ebenso ist es bei einer entsprechenden Anzahl an Erregerelementen denkbar, dass diese in einem Array, d.h. einer bestimmten Anzahl in Längs- und Querrichtung, angeordnet sind. Prinzipiell lässt sich das beschriebene Verfahren bereits mit zwei einzelnen Erregerelementen des Erregers durchführen. Prinzipiell ist es vorteilhaft, wenn die Anzahl der Erregerelemente größer ist. In praktischen Versuchen hat sich eine Anzahl von 18 als zweckmäßig herausgestellt. Je größer die Anzahl der Erregerelemente des Erregers 3 ist, desto flexibler lassen sich die Phasenzentren positionieren. Die Einstellung des Orts der Phasenzentren auf der Reflektorantenne erfolgt über einen einstellbaren Phasenversatz zwischen aktiv angesteuerten Erregerelementen. Eine schematische Darstellung dieses Vorgehens ist in Fig. 1 dargestellt.

In der linken Hälfte der Figur ist die Erzeugung zweier Phasenzentren 5, 8 in erfindungsgemäßer Weise dargestellt. In der rechten Hälfte ist die Erzeugung der Phasenzentren 5, 8 bei einem Radarsystem mit planarer Gruppenantenne dargestellt. Bezug nehmend auf die erfindungsgemäße Variante, ist mit dem Bezugszeichen 2 der parabolisch gekrümmte Reflektor in einem Schnitt in Längsrichtung, d.h. Flugrichtung des Radarsystems, dargestellt. Im Brennpunkt des Reflektors 2 ist der Erreger 3 mit den nicht näher dargestellten Erregerelementen angeordnet. Die Flugrichtung ist mit dem Pfeil rechts des Erregerelements 3 gekennzeichnet. Durch die digitale Ansteuerung bestimmter Erregerelemente des Erregers 3 werden zwei örtlich voneinander getrennte Strahlen 4, 7 mit jeweils zugeordneten Phasenzentren 5, 8 erzeugt. Die beleuchtete Fläche des Reflektors 2 der Strahlen 4, 7 ist mit den Bezugszeichen 6, 9 gekennzeichnet. Der Begriff des Phasenzentrums bezeichnet den elektronischen Referenzpunkt der Antenne, bezüglich dessen Laufzeit- und Phasenmessungen durchgeführt werden. Die an dem Reflektor 2 reflektierten Strahlkeulen 4a, 7a weisen identische Hauptstrahlrichtungen auf. In dem in Fig. 1 dargestellten Ausführungsbeispiel wird nicht die gesamte Fläche des Reflektors 2 bestrahlt. Die dargestellten Phasenzentren 5, 8 können im Sendefall gleichzeitig erzeugt werden, wenn die den jeweiligen Erregerelementen einer Gruppe zugeführten Signale durch Orthogonalisierung voneinander getrennt sind. Zur Erzeugung eines jeweiligen der Phasenzentren 5, 8 wird eine zugeordnete Gruppe von Erregerelementen durch das Speisenetzwerk angesteuert, wobei jedem Phasenzentrum 5, 8 eine Gruppe mit zumindest zwei Erregerelementen zugeordnet ist.

Die zur Erzeugung der Strahlkeulen 4a, 7a bei der planaren Gruppenantenne der rechten Hälfte von Fig. 1 erforderlichen Sendeteile sind nicht im Detail dargestellt. Da die Konfiguration einer planaren Gruppenantenne dem Fachmann prinzipiell bekannt ist, wird auf eine detaillierte Beschreibung an dieser Stelle verzichtet.

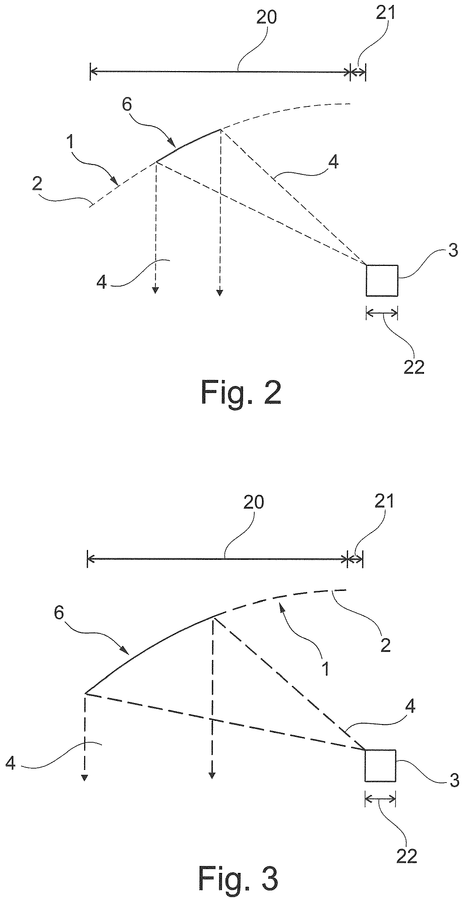

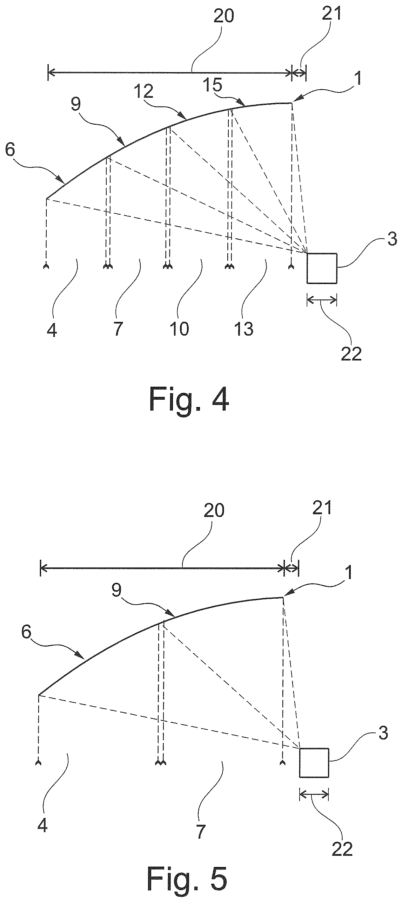

In den Figuren 2 bis 5 werden Ausführungsbeispiele verschiedener Konfigurationen des erfindungsgemäßen Reflektor-basierten Radarsystems mit synthetischer Apertur beschrieben. Dargestellt ist jeweils in einem Schnitt in Längsrichtung der parabolische Reflektor 2 mit einer Länge 20 in Azimut-Richtung, der im Brennpunkt des Reflektors 2 angeordnete Erreger 3, welcher in Längsrichtung (d.h. in Azimut-Richtung) einen Abstand 21 zu dem Reflektor aufweist und eine Breite 22 hat. Die Länge 20 des Reflektors beträgt beispielsweise 8 m, der Abstand zwischen Reflektor 2 und Erreger 3 0,5 m und die Breite des Erregers 3 beträgt beispielsweise 1 m. Das Radarsystem wird beispielsweise im Ka-Band zur Interferometrie entlang der Flugrichtung des Radarsystems (*along-track interferometry*) betrieben. Die Figuren 2 und 3 zeigen einen Sendefall, die Figuren 4 und 5 einen Empfangsfall.

Fig. 2 zeigt einen Betrieb, in dem das Radarsystem einen Strahl 4 erzeugt. Der von dem Erreger 3 beleuchtete Aperturausschnitt der Reflektorantenne ist mit dem Bezugszeichen 6 gekennzeichnet. Das Phasenzentrum liegt in der Mitte des Aperturausschnitts 6. Der Aperturausschnitt weist z.B. eine Breite von etwa 2 m auf. Diese Konfiguration besitzt eine höhere Azimut-Auflösung als ein Betrieb des Radarsystems, wie in Fig. 3 dargestellt. Bei diesem Betrieb wird ein ca. 4 m breiter Aperturausschnitt 6 eingesetzt, wobei weiterhin lediglich ein Phasenzentrum erzeugt ist.

Demgegenüber sind in den Ausführungsbeispielen der Figuren 4 und 5 im Empfangsfall vier bzw. zwei Phasenzentren und zugeordnete Aperturausschnitte 6, 9, 12, und 15 bzw. 6 und 9 ausgebildet. Im Ausführungsbeispiel gemäß Fig. 4 sind hierbei vier ca. 2 m breite Aperturausschnitte ausgebildet, wobei jeweils zwei benachbarte Aperturausschnitte aneinandergrenzen. Im Ausführungsbeispiel gemäß Fig. 5 sind zwei ca. 4 m breite Aperturausschnitte, die aneinander grenzen, vorhanden.

Die in den Figuren 2 bis 5 gezeigten unterschiedlichen Konfiguration lassen sich mittels digitaler Strahlformung realisieren, so dass verschieden breite Aperturausschnitte an gewünschten Stellen des Reflektors 2 erzeugt werden können. Hierdurch entstehen die für Interferometrie benötigten Phasenzentren. Für die Realisierung des Erregers werden beispielsweise 18 Erregerelemente mit einer Größe von jeweils 0,5-facher Wellenlänge bei einer Frequenz von beispielsweise f = 35,5 GHz eingesetzt.

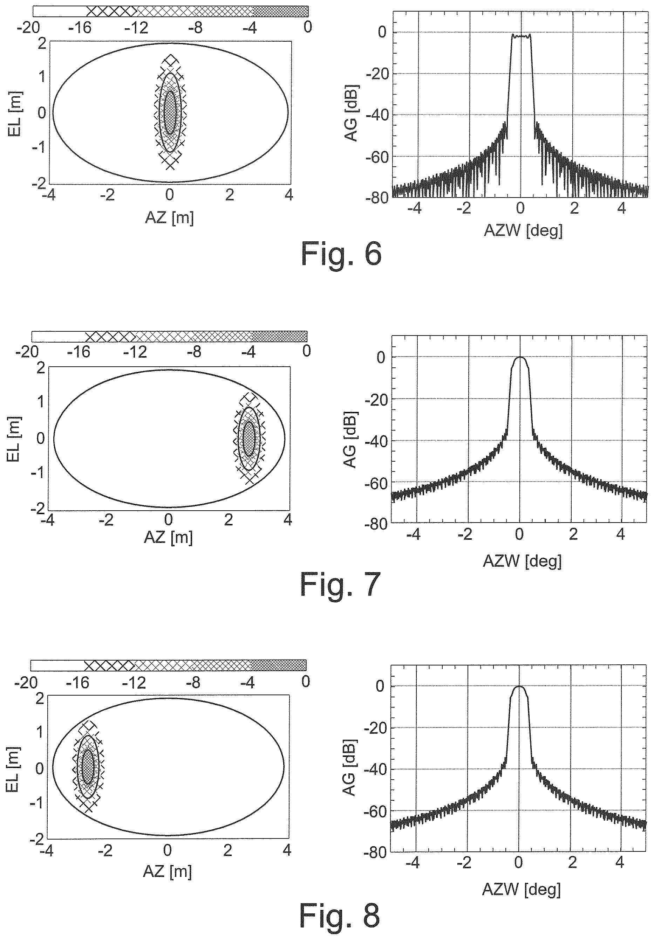

Die Figuren 6 bis 10 zeigen jeweils verschiedene Realisierungen von Phasenzentren auf einem 8 m breiten Reflektor mit verschiedenen Schwerpunkten und Breiten. In den Figuren 6 bis 10 sind jeweils in der linken Hälfte die Oberflächenströme auf dem Reflektor und die sich ausbildenden Fernfelddiagramme in der rechten Hälfte dargestellt. Die Ausdehnung des Reflektors ist in x-Achsenrichtung als Azimut AZ in Metern und in y-Achsenrichtung als Elevation EL in Metern angegeben. Die jeweiligen Fernfelddiagramme zeigen den Antennengewinn AG (Antenna Gain) in dB über den Azimut-Winkel AZW (Azimuth Angle) in Grad deg bei einem jeweiligen Elevationswinkel von 0°. Der Schwerpunkt der sich ausbildenden Oberflächenströme ist hell dargestellt und entspricht dem Schwerpunkt des Phasenzentrums. Die Breite der erzeugten Apertur kann über die Ausdehnung der Oberflächenströme definiert werden. Dies bedeutet, durch die entsprechende Ansteuerung einer Anzahl an Erregerelementen wird die Ausdehnung und damit der Aperturausschnitt definiert.

Die Figuren 6 bis 8 zeigen gleich breite Fernfelddiagramme bei unterschiedlicher Lage des Phasenzentrums auf dem Reflektor. Während in Fig. 6 das Phasenzentrum in der Mitte des Reflektors liegt, ist das Phasenzentrum in Fig. 7 nach rechts und in Fig. 8 nach links ausgelenkt. Um dies zu erreichen, werden die Erregerelemente des Erregers jeweils mit einem definierten Phasenversatz gespeist, wodurch die Verschiebung des Phasenzentrums erzielt wird. Die Variation in der Breite der Phasenzentren wird durch Amplitudengewichtung der Erregerelemente erreicht. Die Amplitudengewichtung der Erregerelemente kann hierbei digital, d.h. mit 0 oder 1, oder mit einem beliebigen Wert zwischen 0 und 1 erfolgen. Die Lage des Phasenzentrums bestimmt sich durch den Phasenversatz zwischen den Erregerelementen. Die Fernfelddiagramme der Figuren 6 bis 8 weisen in die gleiche Richtung. Dies bedeutet, derselbe Bereich am Boden wird mit ihnen beleuchtet.

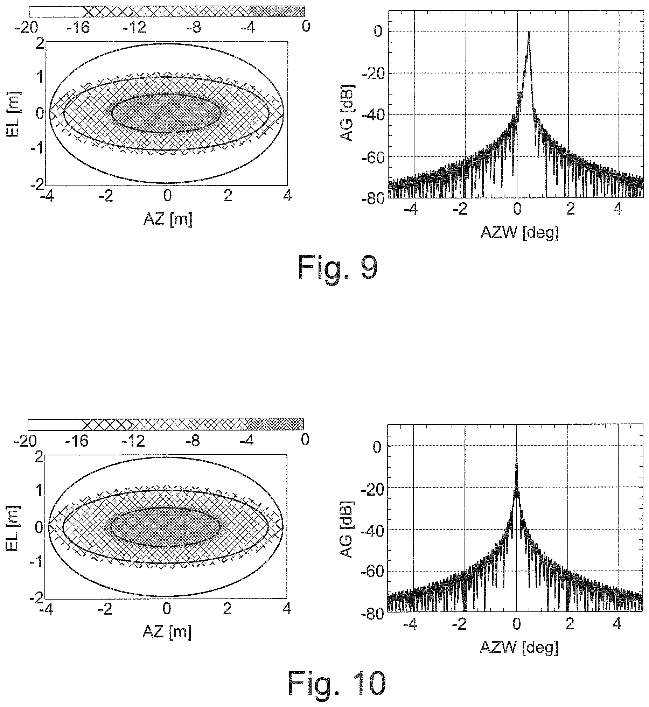

Die Figuren 9 und 10 zeigen zum Vergleich die Aussteuerbarkeit schmaler Fernfelddiagramme durch die Aktivierung verschiedener Erregerelemente. Hierdurch werden verschiedene Bereiche am Boden beleuchtet. Dies kann beispielsweise anhand der Fernfelddiagramme gut beobachtet werden, wobei das Fernfelddiagramm von Fig. 9 einen leicht positiven Azimut-Winkel AZW aufweist, während der Azimut-Winkel AZW im Ausführungsbeispiel gemäß Fig. 10 "0" ist.

Für ein interferometrisch betriebenes Radarsystem ist der Betrieb gemäß den in den Abbildungen 6 bis 8 dargestellten Konfigurationen interessant. Mit ihnen kann ein von allen drei Aperturausschnitten und damit verbundenen Phasenzentren beleuchtetes Gebiet auf dem Boden gleichzeitig vermessen und die Phasendifferenz der drei Messungen weiter interferometrisch ausgewertet werden. Die drei Bereiche des Reflektors können während des Empfangs gleichzeitig verwendet werden, da die Signale der verschiedenen Phasenzentren aufgrund des unterschiedlichen Einfallswinkels auf den Erreger voneinander getrennt werden können.

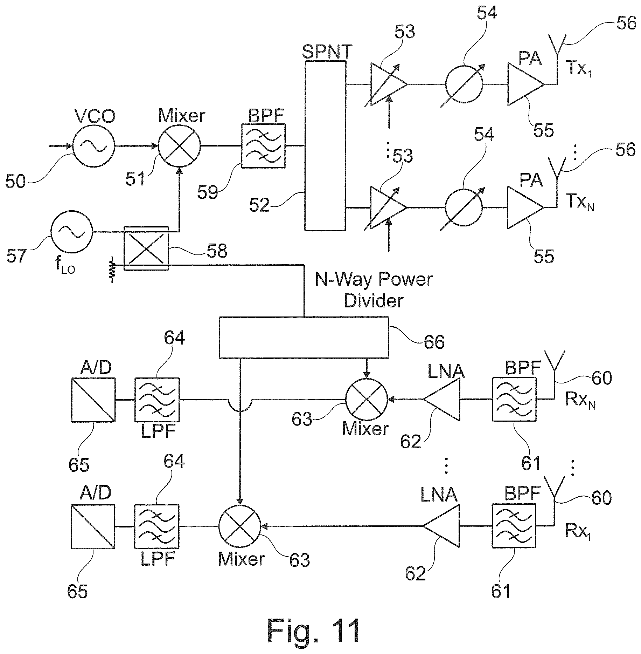

Figur 11 zeigt ein Blockdiagramm eines Radarsystems bis hin zu den Einzelstrahlern der Erreger, bei dem die individuelle Einstellbarkeit von Amplitude und Phase in jedem Sende- und Empfangskanal gewährleistet ist. Der Aufbau zeigt insbesondere das digitale Speisenetzwerk, das im Sendefall, wie hier dargestellt, aus Phasenschiebern und Dämpfungsgliedern, und im Empfangsfall durch eine getrennte Digitalisierung aller Kanäle realisert werden kann. Eine andere Realisierung ist möglich.

Im Sendefall werden die in einem spannungsgesteuerten Oszillator 50 (VCO) erzeugten Signale mit variabler Frequenz durch Mischung in einem Mischer 51 (Mixer) mit den Signalen eines Festfrequenzoszillators 57 auf die gewünschte Sendefrequenz hochgemischt und mit einem Filter 59 (BPF) gefiltert. Über einen Schalter 52 (SPNT - Single Pole N Throw) mit einem Eingang und N Ausgängen können Sendesignale an eine beliebige Anzahl von Sendeelementen 56 weitergegeben werden. Die auf die bis zu N Sendepfade ($Tx_1$, ..., $Tx_N$) verteilten Sendesignale können in jedem dieser Pfade einzeln durch ein Dämpfungsglied 53 und einen Phasenschieber 54 in Amplitude und Phase eingestellt werden, bevor es über einen Leistungsverstärker 55 (PA - Power Amplifier) an das jeweilige Sendeelement 56 (Antenne) des Erregers ausgegeben wird.

Beispielsweise ist für die Erzeugung eines möglichst schmalen Phasenzentrums auf einer rechten Seite des nicht dargestellten Reflektors ein schmaler Erregerstrahl nach rechts auszulenken. Für die Erzeugung eines schmalen Erregerstrahls werden alle Erregerelemente (d.h. Sendeelemente 56) aktiviert. Das Element am linken Rand des Erregers soll die Referenzphase 0 aufweisen. Mit größer werdendem Abstand der Erregerelemente muss eine positive (zusätzliche) Anfangsphase zu den Signalen hinzugefügt werden, d.h. Verzögerung bzw. Phasenverschiebung der Sendesignale durchgeführt werden.

Im Empfangsfall werden die Signale der verschiedenen Erregerelemente (Empfangselemente 60) einer Anzahl N an Empfangspfaden $Rx_1$, ..., $Rx_N$ parallel verarbeitet und separat digitalisiert. Nach den Empfangselementen 60 der einzelnen Erregerelemente werden die Empfangssignale mit einem jeweiligen Filter 61 gefiltert, so dass nur der genutzte Frequenzbereich weiterverarbeitet wird. In einem rauscharmen Verstärker 62 (LNA - Low Noise Amplifier) werden die Empfangssignale verstärkt. Anschließend findet in einem jeweiligen Mischer 63 (Mixer) eine Abwärtsmischung in einen niedrigeren Frequenzbereich (typischerweise Basisband) statt. Dazu wird z.B. das Signal des bereits im Sendepfad verwendeten Festfrequenzoszillators 57 über einen Richtkoppler 58 und einen Leistungsteiler 66 (N-Way Power Divider) zu den Mischern 63 weitergeleitet. Jeder Kanal wird in dieser Weise separat ins Basisband gemischt. Nach einer Tiefpassfilterung (Bezugszeichen 64 oder LPF - Low Pass Filter) werden die Signale in einem jeweiligen AD-Wandler 65 (A/D) digitalisiert. Die Gewichtung der einzelnen Signale findet im Empfangsfall nach der Digitalisierung statt. Sowohl Amplituden als auch Phasengewichtungen sind möglich.

In gleicher Weise wie im Sendefall werden für ein schmales Phasenzentrum die Signale mehrerer Erregerelemente gemeinsam verarbeitet. Durch Multiplikation eines Phasenterms, der abhängig von der Position des jeweiligen Elements bezüglich eines Referenzelements linear ansteigt bzw. abfällt, kann die Lage des Phasenzentrums auf dem Reflektor nach links bzw. rechts ausgelenkt werden. Dies entspricht der Ansteuerung von planaren Antennenarrays, für den Fall, dass die Hauptstrahlrichtung in eine bestimmte Richtung weisen soll.

Durch die Verwendung eines digital ansteuerbaren Erregers können auf einen Reflektor gleichzeitig mehrere Phasenzentren mit verschieden großen physikalischen Aperturen erzeugt werden. Dadurch können verschiedene, den Phasenzentren entsprechende Positionen auf dem Reflektor zur Messung verwendet und die Daten der entsprechenden Phasenzentren kohärent verarbeitet werden. Eine kohärente Verarbeitung bedeutet die gleichzeitige Verarbeitung von Phase und Amplitude. Dies bietet die Möglichkeit, Anwendungen, die das gleichzeitige Messen an mehreren Phasenzentren benötigen, in einem Reflektorsystem zu realisieren und das Radarsystem an sich ändernde Anforderungen anzupassen. Diese Systemgestaltung erfordert eine Speisung des Reflektors über ein digital steuerbares Speisenetzwerk des Erregers.

Ein Vorteil des Vorgehens besteht darin, dass für die Erzeugung mehrerer Phasenzentren bei einem Reflektorbasierten Antennensystem nur ein Reflektor benötigt wird und nicht mehrere Einzelreflektoren, wie dies bei der Realisierung über planare Gruppenantennensysteme der Fall ist. Hierdurch wird die Flexibilität des Systems deutlich erhöht und die Vorteile von Reflektor-basierten Antennensystemen können genutzt werden.

Bezugszeichenliste

| | |
|---|---|
| 1 | Reflektorantenne |
| 2 | Reflektor |
| 3 | Erreger |
| 4 | Strahl |
| 4a | Strahlkeule |
| 5 | Phasenzentrum des Strahls 4 |

| 6 | beleuchteter Aperturausschnitt der Reflektorantenne |
|---|---|
| 7 | Strahl |
| 7a | Strahlkeule |
| 8 | Phasenzentrum des Strahls 7 |
| 9 | beleuchteter Aperturausschnitt der Reflektorantenne |
| 10 | Strahl |
| 11 | Phasenzentrum des Strahls 10 |
| 12 | beleuchteter Aperturausschnitt der Reflektorantenne |
| 13 | Strahl |
| 14 | Phasenzentrum des Strahls 13 |
| 15 | beleuchteter Aperturausschnitt der Reflektorantenne |
| 20 | Erstreckung des Reflektors in Azimut-Richtung |
| 21 | Abstand zwischen Reflektor und Erreger |
| 22 | Breite des Erregers |
| 50 | Oszillator |
| 51 | Mischer |
| 52 | Schalter |
| 53 | Dämpfungsglied |
| 54 | Phasenschieber |
| 55 | Leistungsverstärker |
| 56 | Sendeelement |
| 57 | Festfrequenzoszillator |
| 58 | Richtkoppler |
| 59 | Filter |
| 60 | Empfangselement |
| 61 | Filter |
| 62 | Verstärker |
| 63 | Mischer |
| 64 | Leistungsteiler |
| 65 | AD-Wandler |
| 66 | Leistungsteiler |

**Patentansprüche**

1. Verfahren zum Betreiben eines Satelliten-gestützten Radarsystems mit synthetischer Apertur, wobei das Radarsystem eine Reflektorantenne (1) und einen Erreger (3) umfasst, wobei der Erreger (3) zumindest zwei Erregerelemente und ein digitales Speisenetzwerk umfasst, bei dem im Sendefall durch das Speisenetzwerk eine Amplituden- und Phasenbelegung der Erregerelemente in vorgegebener Weise variiert wird, um von dem Erreger (3) zur Reflektorantenne (1) hin gerichtete Strahlen in Bezug auf deren Ausleuchtungsfläche der Reflektorantenne (1) zur Erzeugung von Strahlen mit gleicher Richtung im Fernfeld zu steuern,
**dadurch gekennzeichnet, dass**
ein Phasenzentrum auf dem Reflektor erzeugt und dessen Position auf dem Reflektor von Sendepuls zu Sendepuls variiert wird, so dass der Abstand der erzeugten Phasenzentren zueinander entlang einer zu formenden synthetischen Apertur eingestellt wird.

2. Verfahren nach Anspruch 1, bei dem zur Erzeugung eines Phasenzentrums, das in einer Mitte der Reflektorantenne (1) ausgebildet ist, die Reflektorantenne (1) teilweise oder vollständig ausgeleuchtet wird, wobei aktiv angesteuerte Erregerelemente durch das Speisenetzwerk mit einem Sendesignal mit der gleichen Phase angesteuert werden.

3. Verfahren nach Anspruch 1 oder 2, bei dem zur Erzeugung eines Phasenzentrums, das aus der Mitte der Reflektorantenne (1) in einer Erstreckungsrichtung ausgelenkt ist und einen Ausschnitt der Reflektorantenne (1) beleuchtet, aktiv angesteuerte Erregerelemente mit einem Sendesignal mit unterschiedlicher Phase angesteuert werden.

4. Verfahren nach Anspruch 3, bei dem das Maß der Auslenkung durch den Phasenunterschied des Sendesignals zwischen den, insbesondere benachbarten, Erregerelementen gesteuert wird.

5. Verfahren nach einem der Ansprüche 2 bis 4, bei dem der beleuchtete Ausschnitt der Reflektorantenne (1) durch

9

die Anzahl der aktiv angesteuerten Erregerelemente gesteuert wird.

6. Verfahren nach einem der vorhergehenden Ansprüche, bei dem mehrere Phasenzentren mit jeweiliger Apertur erzeugt werden, indem eine jeweilige Gruppe von Erregerelementen durch das Speisenetzwerk angesteuert wird, wobei jedem Phasenzentrum eine Gruppe mit zumindest zwei Erregerelementen zugeordnet ist.

7. Verfahren nach Anspruch 6, bei dem die einer jeweiligen Gruppe von Erregerelementen zugeführten Signale derart geformt werden, dass sie auch bei zeitgleicher Abstrahlung von verschiedenen Phasenzentren voneinander getrennt werden.

8. Verfahren zum Betreiben eines Satelliten-gestützten Radarsystems mit synthetischer Apertur, wobei das Radarsystem eine Reflektorantenne (1) und einen Erreger (3) umfasst, wobei der Erreger (3) zumindest zwei Erregerelemente und ein digitales Speisenetzwerk umfasst, bei dem im Empfangsfall durch das Speisenetzwerk in vorgegebener Weise eine Kombination der Amplituden und Phasen der von den Erregerelementen bereitgestellten Signale vorgenommen wird, um von der Reflektorantenne (1) zu dem Erreger (3) hin gerichtete Strahlen in Bezug auf deren Ausleuchtungsfläche der Reflektorantenne (1), welche von Strahlen mit gleicher Richtung im Fernfeld resultiert, zu steuern,
**dadurch gekennzeichnet, dass**
ein Phasenzentrum auf dem Reflektor erzeugt und dessen Position auf dem Reflektor von Sendepuls zu Sendepuls variiert wird, so dass der Abstand der erzeugten Phasenzentren zueinander entlang einer zu formenden synthetischen Apertur eingestellt wird.

9. Verfahren nach Anspruch 8, bei dem zur Erzeugung eines Phasenzentrums, das aus der Mitte der Reflektorantenne (1) in einer Erstreckungsrichtung ausgelenkt ist und einen Ausschnitt der Reflektorantenne (1) beleuchtet, Signale von Erregerelementen mit unterschiedlicher Phase kombiniert werden.

10. Verfahren nach Anspruch 9, bei dem der beleuchtete Ausschnitt (Apertur) der Reflektorantenne (1) durch die Anzahl der miteinander kombinierten Signale von Erregerelementen gesteuert wird.

11. Verfahren nach einem der Ansprüche 8 bis 10, bei dem mehrere Phasenzentren mit jeweiliger Apertur erzeugt werden, indem die Signale einer jeweiligen Gruppe von Erregerelementen durch das Speisenetzwerk kombiniert werden, wobei jedem Phasenzentrum eine Gruppe mit zumindest zwei Erregerelementen zugeordnet ist.

12. Radarsystem mit synthetischer Apertur, wobei das Radarsystem eine Reflektorantenne (1) und einen Erreger (3) umfasst, wobei der Erreger (3) zumindest zwei Erregerelemente und ein digitales Speisenetzwerk umfasst, wobei das Radarsystem dazu ausgebildet ist, im Sendefall durch das Speisenetzwerk eine Amplituden- und/oder Phasenbelegung der Erregerelemente in vorgegebener Weise zu variieren, um von dem Erreger (3) zur Reflektorantenne (1) hin gerichtete Strahlen in Bezug auf deren Ausleuchtungsfläche der Reflektorantenne (1) zur Erzeugung von Strahlen mit gleicher Richtung im Fernfeld zu steuern und/oder im Empfangsfall durch das Speisenetzwerk in vorgegebener Weise eine Kombination der Amplituden und Phasen der von den Erregerelementen bereitgestellten Signale vorzunehmen, um von der Reflektorantenne (1) zu dem Erreger hin gerichtete Strahlen in Bezug auf die Ausleuchtungsfläche der Reflektorantenne (1), welche von Strahlen mit gleicher Richtung im Fernfeld resultiert, zu steuern,
**dadurch gekennzeichnet, dass**
ein Phasenzentrum auf dem Reflektor erzeugt und dessen Position auf dem Reflektor von Sendepuls zu Sendepuls variiert wird, so dass der Abstand der erzeugten Phasenzentren zueinander entlang einer zu formenden synthetischen Apertur eingestellt wird.

13. Radarsystem nach Anspruch 12, bei dem das Radarsystem weiter dazu ausgebildet ist, das Verfahren gemäß einem der Ansprüche 2 bis 11 auszuführen.

14. Radarsystem nach Anspruch 12 oder 13, bei dem die Reflektorantenne (1) einen einzigen Reflektor (2) aufweist.

15. Radarsystem nach Anspruch 14, bei dem der Reflektor (2) in einem Schnitt in Längsrichtung die Eigenschaften eines Parabolreflektors aufweist.

16. Radarsystem nach Anspruch 15, bei dem der Reflektor (2) ein Reflect-Array aus einer Mehrzahl an Einzelreflektoren ist, wobei die Einzelreflektoren die Phase auftreffender elektromagnetischer Wellen in vorgegebener Weise verschieben, um die Eigenschaften des Parabolreflektors nachzubilden.

17. Radarsystem nach Anspruch 15, bei dem der Reflektor (2) einen einzigen, insbesondere gekrümmten Hauptspiegel umfasst, dessen Oberfläche in dem Schnitt eine parabolische Krümmung aufweist.

18. Radarsystem nach einem der Ansprüche 12 bis 17, bei dem der Erreger (3) im Brennpunkt der Reflektorantenne (1) angeordnet ist.

**Claims**

1. A method for operating a satellite-based radar system with a synthetic aperture, wherein the radar system includes a reflector antenna (1) and an exciter (3), wherein the exciter (3) includes at least two exciter elements and a digital feeding network, wherein, when transmitting, an amplitude and phase distribution of the exciter elements is varied in a predefined manner by the feed network, in order to control beams directed from the exciter (3) to the reflector antenna (1), with respect to their illumination area of the reflector antenna (1) for generating beams with the same direction in the far field,
   **characterized in that**
   a phase center is generated on the reflector, the position of which on the reflector is varied for each transmission pulse, so that the distance between the generated phase centers along a synthetic aperture to be formed is adjusted.

2. The method according to claim 1, wherein, in order to generate a phase center that is formed in a center of the reflector antenna (1), the reflector antenna (1) is partially or completely illuminated, wherein actively controlled exciter elements are controlled by the feeding network using a transmission signal with the same phase.

3. The method according to claim 1 or 2, wherein, in order to generate a phase center that is offset relative to the center of the reflector antenna (1) in an extension direction and that illuminates a section of the reflector antenna (1), actively controlled exciter elements are controlled using a transmission signal with a different phase.

4. The method according to claim 3, wherein the amount of the offset is controlled by the phase difference of the transmission signals between the, in particular adjacent, exciter elements.

5. The method according to one of the claims 2 to 4, wherein the illuminated section of the reflector antenna (1) is controlled by the number of actively controlled exciter elements.

6. The method according to one of the afore-mentioned claims, wherein several phase centers with a respective aperture are generated by controlling a respective group of exciter elements by way of the feeding network, wherein a group of at least two exciter elements is allocated to each phase center.

7. The method according to claim 6, wherein the signals fed to a respective group of exciter elements are formed in such a manner that they are also separated from each other when they are reflected simultaneously off different phase centers.

8. A method for operating a satellite-based radar system with a synthetic aperture, wherein the radar system includes a reflector antenna (1) and an exciter (3), wherein the exciter (3) includes at least two exciter elements and a digital feeding network, wherein, during reception, a combination of the amplitudes and phases of the signals provided by the exciter elements is carried out in a predefined manner by the feed network, in order to control beams directed from the reflector antenna (1) to the exciter (3), with respect to their illumination area of the reflector antenna (1), which results from beams with the same direction in the far field,
   **characterized in that**
   a phase center is generated on the reflector, the position of which on the reflector is varied for each transmission pulse, so that the distance between the generated phase centers along a synthetic aperture to be formed is adjusted.

9. The method according to claim 8, wherein, in order to generate a phase center that is offset relative to the center of the reflector antenna (1) in an extension direction and that illuminates a section of the reflector antenna (1), signals of exciter elements having different phases are combined.

10. The method according to claim 9, wherein the illuminated section (aperture) of the reflector antenna (1) is controlled by the number of combined signals of exciter elements.

11. The method according to one of the claims 8 to 10, wherein several phase centers with a respective aperture are generated by combining the signals of a respective group of exciter elements by way of the feeding network, wherein a group of at least two exciter elements is allocated to each phase center.

12. A synthetic aperture radar system, wherein the radar system includes a reflector antenna (1) and an exciter (3), wherein the exciter (3) includes at least two exciter elements and a digital feeding network, wherein the radar system is configured, when transmitting, to vary an amplitude and/or phase distribution of the exciter elements in a predefined manner using the feed network, in order to control beams directed from the exciter (3) to the reflector antenna (1), with respect to their illumination area of the reflector antenna (1) for generating beams with the same direction in the far field, and/or, when receiving, to carry out a combination of the amplitudes and phases of the signals provided by the exciter elements in a predefined manner using the feed network, in order to control beams directed from the reflector antenna (1) to the exciter, with respect to their illumination area of the reflector antenna (1), which results from beams with the same direction in the far field,
**characterized in that**
a phase center is generated on the reflector, the position of which on the reflector is varied for each transmission pulse, so that the distance between the generated phase centers along a synthetic aperture to be formed is adjusted.

13. The radar system according to claim 12, wherein the radar system is further configured to carry out the method according to one of the claims 2 to 11.

14. The radar system according to claim 12 or 13, wherein the reflector antenna (1) comprises a single reflector (2).

15. The radar system according to claim 14, wherein, in a sectional view, the reflector (2) features the characteristics of a parabolic reflector.

16. The radar system according to claim 15, wherein the reflector (2) is a reflect-array comprised of a plurality of individual reflectors, wherein the individual reflectors shift the phase of the incident electromagnetic waves in a predefined manner, in order to reproduce the characteristics of the parabolic reflector.

17. The radar system according to claim 15, wherein the reflector (2) includes a single, in particular curved, main mirror, the surface of which has a parabolic curvature in the sectional view.

18. The radar system according to one of the claims 12 to 17, wherein the exciter (3) is disposed at the focal point of the reflector antenna (1).

**Revendications**

1. Procédé de fonctionnement d'un système radar par satellite à ouverture synthétique, où le système radar comporte une antenne à réflecteur (1) et un excitateur (3), où l'excitateur (3) comporte au moins deux éléments excitateurs et un réseau d'alimentation numérique, où, dans une situation d'émission, une répartition d'amplitude et de phase des éléments excitateurs est variée de manière prédéfinie par le réseau d'alimentation, afin de commander des faisceaux orientés de l'excitateur (3) vers l'antenne à réflecteur (1), par rapport à leur surface d'illumination de l'antenne à réflecteur (1), afin de générer des faisceaux de même direction dans le champ éloigné,
**caractérisé en ce que**
un centre de phase est généré sur le réflecteur et sa position sur le réflecteur est variée pour chaque impulsion émise, de sorte que la distance entre les centres de phase générés le long d'une ouverture synthétique à former est réglée.

2. Procédé selon la revendication 1, où, pour générer un centre de phase qui est formé au milieu de l'antenne à réflecteur (1), l'antenne à réflecteur (1) est partiellement ou entièrement illuminée, où des éléments excitateurs activement commandés sont commandés par le réseau d'alimentation au moyen d'un signal d'émission de même phase.

3. Procédé selon la revendication 1 ou 2, où pour générer un centre de phase qui est décalé par rapport au milieu de l'antenne à réflecteur (1) dans une direction d'extension et qui illumine une section de l'antenne à réflecteur (1), des éléments excitateurs activement commandés sont commandés au moyen d'un signal d'émission de phase différente.

4. Procédé selon la revendication 3, où l'amplitude du décalage est commandée par la différence de phase du signal d'émission entre les éléments excitateurs, en particulier adjacents.

5. Procédé selon l'une des revendications 2 à 4, où la section illuminée de l'antenne à réflecteur (1) est commandée par le nombre d'éléments excitateurs activement commandés.

6. Procédé selon l'une des revendications précédentes, où plusieurs centres de phase avec une ouverture respective sont générés en commandant un groupe respectif d'éléments excitateurs au moyen du réseau d'alimentation, un groupe avec au moins deux éléments excitateurs étant associé à chaque centre de phase.

7. Procédé selon la revendication 6, où les signaux fournis à un groupe respectif d'éléments excitateurs sont formés de telle manière qu'ils sont aussi séparés lorsqu'ils sont simultanément réfléchis à partir de centres de phase différents.

8. Procédé de fonctionnement d'un système radar par satellite à ouverture synthétique, où le système radar comporte une antenne à réflecteur (1) et un excitateur (3), où l'excitateur (3) comporte au moins deux éléments excitateurs et un réseau d'alimentation numérique, où, dans une situation de réception, une combinaison des amplitudes et phases des signaux fournis par les éléments excitateurs est réalisée de manière prédéfinie par le réseau d'alimentation, afin de commander des faisceaux orientés de l'antenne à réflecteur (1) vers l'excitateur (3), par rapport à leur surface d'illumination de l'antenne à réflecteur (1) qui résulte de faisceaux de même direction dans le champ éloigné,
**caractérisé en ce que**
un centre de phase est généré sur le réflecteur et sa position sur le réflecteur est variée pour chaque impulsion émise, de sorte que la distance entre les centres de phase générés le long d'une ouverture synthétique à former est réglée.

9. Procédé selon la revendication 8, où pour générer un centre de phase qui est décalé par rapport au milieu de l'antenne à réflecteur (1) dans une direction d'extension et qui illumine une section de l'antenne à réflecteur (1), des signaux d'éléments excitateurs de phase différente sont combinés.

10. Procédé selon la revendication 9, où la section illuminée (ouverture) de l'antenne à réflecteur (1) est commandée par le nombre de signaux combinés d'éléments excitateurs.

11. Procédé selon l'une des revendications 8 à 10, où plusieurs centres de phase d'ouverture respective sont générés en combinant les signaux d'un groupe respectif d'éléments excitateurs au moyen du réseau d'alimentation, un groupe avec au moins deux éléments excitateurs étant associé à chaque centre de phase.

12. Système radar à ouverture synthétique, où le système radar comporte une antenne à réflecteur (1) et un excitateur (3), où l'excitateur (3) comporte au moins deux éléments excitateurs et un réseau d'alimentation numérique, où, dans une situation d'émission, le système radar est configuré pour varier de manière prédéfinie une répartition d'amplitude et/ou de phase des éléments excitateurs au moyen du réseau d'alimentation, afin de commander des faisceaux orientés de l'excitateur (3) vers l'antenne à réflecteur (1), par rapport à leur surface d'illumination de l'antenne à réflecteur (1), afin de générer des faisceaux de même direction dans le champ éloigné, et/ou, dans une situation de réception, le système radar est configuré pour réaliser de manière prédéfinie une combinaison des amplitudes et phases des signaux fournis par les éléments excitateurs au moyen du réseau d'alimentation, afin de commander des faisceaux orientés de l'antenne à réflecteur (1) vers l'excitateur, par rapport à leur surface d'illumination de l'antenne à réflecteur (1) qui résulte de faisceaux de même direction dans le champ éloigné,
**caractérisé en ce que**
un centre de phase est généré sur le réflecteur et sa position sur le réflecteur est variée pour chaque impulsion émise, de sorte que la distance entre les centres de phase générés le long d'une ouverture synthétique à former est réglée.

13. Système radar selon la revendication 12, où le système radar est en outre configuré pour mettre en oeuvre le procédé selon l'une des revendications 2 à 11.

14. Système radar selon la revendication 12 ou 13, où l'antenne à réflecteur (1) comporte un seul réflecteur (2).

**15.** Système radar selon la revendication 14, où le réflecteur (2) présente les propriétés d'un réflecteur parabolique dans une coupe en direction longitudinale.

**16.** Système radar selon la revendication 15, où le réflecteur (2) est un « reflect-array » composé d'une pluralité de réflecteurs individuels, où les réflecteurs individuels décalent la phase des ondes électromagnétiques incidentes de manière prédéfinie, afin de reproduire les propriétés du réflecteur parabolique.

**17.** Système radar selon la revendication 15, où le réflecteur (2) comporte un seul miroir principal, en particulier courbé, dont la surface présente, en coupe, une courbure parabolique.

**18.** Système radar selon la revendication 12 à 17, où l'excitateur (3) est disposé dans le point focal de l'antenne à réflecteur (1).

Fig. 1

Fig. 2

Fig. 3

Fig. 4

Fig. 5

Fig. 6

Fig. 7

Fig. 8

Fig. 9

Fig. 10

Fig. 11

**EP 2 775 317 B1**

**IN DER BESCHREIBUNG AUFGEFÜHRTE DOKUMENTE**

**In der Beschreibung aufgeführte Patentdokumente**

- US 6175326 B1
- US 20090262037 A1